# FASCICULE DE BREVET EUROPEEN

(11) **EP 0 722 542 B1**
(45) Date de publication et mention de la délivrance du brevet: **18.03.1998**
(21) Numéro de dépôt: 94927660.4
(22) Date de dépôt: 28.09.1994
(51) Int. Cl.: F16D 55/227

(54) **FREIN A DISQUE A ETRIER COULISSANT ET COLONNETTE POUR UN TEL FREIN A DISQUE**
SCHWIMMSATTEL- SCHEIBENBREMSE UND STIFT DAFÜR
DISK BRAKE WITH SLIDING CALIPER AND STUD FOR SUCH DISK BRAKE

(30) Priorité: 14.10.1993 IT TO930750
(43) Date de publication de la demande: 24.07.1996
(73) Titulaire: ROBERT BOSCH SISTEMI FRENANTI S.p.A., 26013 Crema (IT)
(72) Inventeur: TRIBUZIO, Pasquale, I-70032 Bitonto (IT); ERRICO, Angelantonio C.P. 26 Contrada Lamazzevinna, I-70054 Giovinazzo (IT)
(74) Mandataire: Bentz, Jean-Paul
(86) Numéro de dépôt international: EP9403240
(87) Numéro de publication internationale: WO9510712

(56) Documents cités:
- EP-A- 0 511 581
- DE-A- 2 544 370
- DE-A- 3 635 828
- DE-A- 3 721 718
- DE-A- 3 825 101
- FR-A- 2 117 636
- US-A- 4 574 922
- US-E- R E30 255
- PATENT ABSTRACTS OF JAPAN vol. 4, no. 23 (M-093) 26 Février 1980 & JP,A,54 160 971 (TOYOTA) 20 Décembre 1979

## Description

La présente invention concerne les freins à disque à étrier coulissant, destinés notamment à équiper les véhicules automobiles.

L'invention concerne plus particulièrement un frein à disque à étrier monté coulissant sur un support fixe et comportant deux éléments de friction reçus en ancrage et coulissement dans le support fixe, et susceptibles de venir en engagement de friction avec les faces opposées d'un disque tournant lors de l'actionnement d'un moteur de frein porté par l'étrier coulissant par rapport au support fixe au moyen d'au moins une colonnette axiale comportant une première partie solidaire de l'étrier ou du support fixe et une seconde partie reçue à coulissement dans un alésage correspondant du support fixe ou de l'étrier respectivement, des moyens élastiques étant disposés entre la colonnette axiale et l'alésage dans lequel elle coulisse.

Dans les freins à disque de ce type, le montage à coulissement sur le support fixe pose de nombreux problèmes qu'on a tenté de résoudre de différentes façons.

Par exemple, on a déjà disposé un manchon en caoutchouc entre la colonnette et l'alésage dans lequel elle coulisse, pour solliciter l'étrier vers sa position initiale après une action de freinage, comme dans US-A-4 334 598 ou US-A-4 436 186. On connaît d'autre part, par exemple de US-A-4 061 209 ou GB-A-1 573 305, un frein à disque dans lequel un des alésages recevant une des colonnettes est radialement surdimensionné et où la colonnette est pressée en position excentrique en contact avec la paroi de l'alésage par le ressort normalement disposé entre l'étrier et la garniture de friction, pour éviter que la colonnette ne subisse des contraintes lors d'un freinage.

On connaît également, du document US-E-30 255, un frein a disque du type rappelé ci-dessus, dans lequel est disposé, entre la colonnette et l'alésage qui la reçoit, un coussinet élastique pour solliciter l'étrier vers sa position initiale après une action de freinage.

Une telle construction nécessite cependant que la colonnette soit rigoureusement coaxiale à l'alésage qui la reçoit, sinon le guidage en coulissement de l'étrier sur le support fixe n'est assuré qu'imparfaitement, et il en résulte des vibrations de l'étrier lors des actions de freinage, pouvant générer des bruits importants et même endommager ou détériorer la colonnette par une usure prématurée.

L'invention a donc pour objet un frein à disque du type décrit plus haut, dans lequel le coulissement de l'étrier sur le support fixe soit assuré même en cas de défaut de parallélisme entre la colonnette et l'alésage qui la reçoit, ou en cas de différence entre les écartements d'une part des axes des alésages dans le support fixe et d'autre part des axes de colonnettes et qui permette un mouvement de rotation de l'étrier par rapport au support fixe lors d'une action de freinage sans entraver le coulissement de l'étrier.

Dans ce but, l'invention est essentiellement caractérisée en ce que la seconde partie de la colonnette est constituée d'un tube en matériau élastique, des fentes étant pratiquées dans l'épaisseur du tube et sur au moins une partie de sa longueur, les fentes étant régulièrement réparties le long de la périphérie du tube pour former des lamelles équidistantes et de largeur égale, chaque lamelle présentant sur sa longueur au moins une ondulation, dont la convexité est dirigée vers l'extérieur de la colonnette, le rayon au sommet de l'ondulation étant au repos supérieur ou égal au rayon de l'alésage.

De la sorte, cette partie de colonnette sera capable de tenir compte aussi bien des défauts de parallélisme entre elle et l'alésage qui la reçoit, que des mouvements de l'étrier provoqués par le couple de freinage, sans entraver le coulissement de l'étrier.

D'autres buts, caractéristiques et avantages de l'invention ressortiront de la description qui suit d'un mode de réalisation donné à tire d'exemple en relation avec les dessins annexés sur lesquels :
- La Figure 1 est une vue de dessus en coupe partielle d'un frein à disque réalisé conformément à l'invention,
- La Figure 2 est une vue agrandie de la colonnette équipant le frein à disque de la figure 1,
- La Figure 2A est une vue en perspective de la colonnette de la Figure 2,
- La Figure 3 est une vue d'une variante de la colonnette de la Figure 2,
- La Figure 4 est une vue d'une deuxième variante de la colonnette de la Figure 2,
- La Figure 4A est une vue en perspective de la colonnette de la Figure 4,
- La Figure 5 est une vue d'une autre variante de la colonnette de la Figure 2,
- La Figure 5A est une vue en perspective de la colonnette de la Figure 5,
- La Figure 5B est une vue en coupe d'une extrémité de la colonnette de la Figure 5,
- La Figure 6 est une vue en coupe d'une variante de la colonnette de la Figure 4,
- La Figure 7 est une vue en coupe et à plus grande échelle de la colonnette équipant le frein à disque de la Figure 1, et
- La Figure 8 est une vue analogue à celle de la Figure 7, d'une variante de montage d'une colonnette selon la présente invention.

Sur les différentes figures, les mêmes éléments sont affectés des mêmes signes de référence.

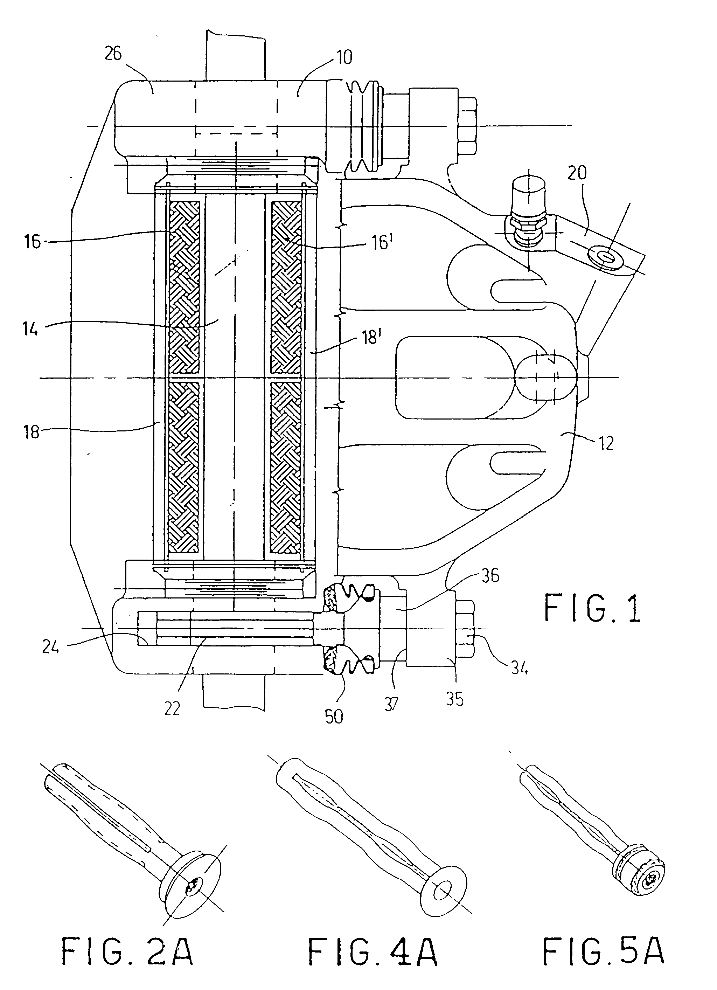

En se reportant tout d'abord à la Figure 1, on voit que le frein à disque représenté sur la Figure comporte un support fixe 10 prévu pour être associé à une partie fixe du véhicule (non représentée). Le support fixe 10 reçoit en coulissement un étrier 12 chevauchant un disque 14 prévu pour être associé en rotation à une roue de véhicule (non représentée).

Le frein à disque comporte par ailleurs deux organes de friction 16, 16' munis respectivement de plaques support 18, 18', susceptibles de venir en engagement de friction avec le disque tournant 14 lors de l'actionnement d'un moteur de frein 20 porté par l'étrier 12. Les organes de friction sont reçus en ancrage et coulissement sur le support fixe 10.

L'étrier 12 coulisse sur le support fixe 10 au moyen de deux colonnettes axiales 22 d'axe parallèle à celui du disque 14. Les colonnettes 22 sont solidaires de l'étrier 12 et sont reçues en coulissement dans des alésages correspondants 24 formés dans des bras 26 du support fixe 10.

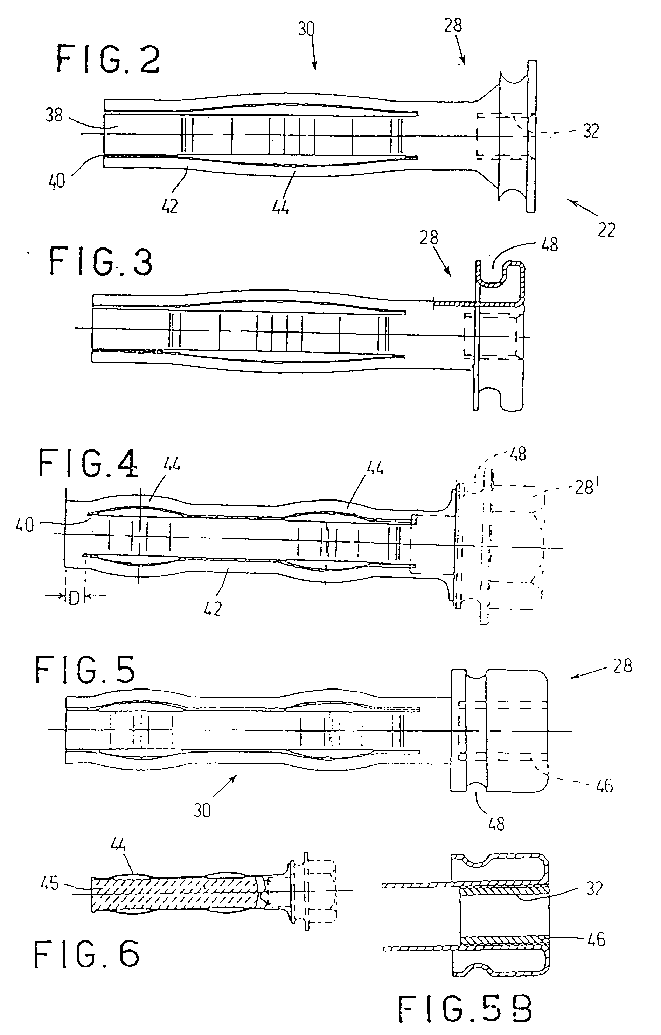

De façon plus précise comme on le voit mieux sur les Figure 2 à 5A, chaque colonnette comporte une première partie 28, destinée à solidariser la colonnette à l'étrier 12, et une seconde partie 30, destinée à pénétrer dans l'alésage 24 du support fixe 10.

Dans le mode de réalisation de la Figure 2, la première partie 28 est d'une seule pièce avec la seconde partie 30 de la colonnette. La première partie 28 est massive et comporte un alésage taraudé 32 pour permettre la solidarisation de la colonnette 22 à l'étrier, par exemple au moyen d'une vis 34 (Figure 1) traversant une ouverture pratiquée dans un bras 35 de l'étrier, et éventuellement une entretoise 36.

La seconde partie 30 de la colonnette est constituée d'un tube en matériau élastique, comme par exemple de l'acier à ressort inoxydable ou écroui.

De façon à augmenter l'élasticité de la partie 30, on pourra avantageusement pratiquer des fentes radiales 40 dans l'épaisseur du tube 38, régulièrement réparties le long de la périphérie du tube 38. Dans l'exemple représenté, quatre fentes ont été utilisées, mais on aurait aussi bien pu en utiliser deux, trois, cinq ou plus, selon la raideur que l'on désire conférer à la partie 30.

Les fentes 40 pratiquées dans le tube 38 divisent celui-ci en autant de lamelles axiales 42, équidistantes et de largeur égale dans le sens circonférentiel.

De façon également avantageuse, on pourra former sur chaque lamelle 42 des ondulations 44, dont la convexité est dirigée radialement vers l'extérieur de la colonnette.

Sur les Figures 2 et 3, chaque lamelle ne comporte qu'une ondulation, alors que sur les Figure 4 et 5, les lamelles comportent chacune deux ondulations. Ces réalisations peuvent bien sûr être combinées et, comme dans l'exemple représenté avec quatre lamelles, on peut utiliser deux lamelles à une ondulation intercalées entre deux lamelles à deux ondulations. On pourra également prévoir un nombre d'ondulations supérieur à deux.

De façon à ce que la colonnette 22 remplisse sa fonction de guidage de l'étrier en coulissement sur le support fixe 10, le rayon au sommet de chaque ondulation 44 est au repos, c'est-à-dire lorsque la colonnette n'est pas insérée dans l'alésage 24, au moins égal au rayon de l'alésage 24, et de préférence légèrement supérieur pour assurer le maintien de l'étrier sans gêner son coulissement.

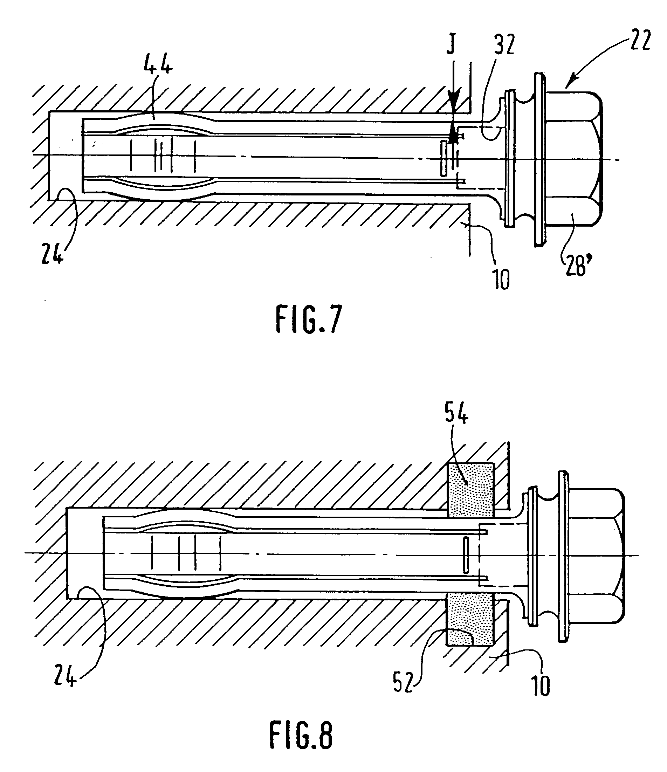

On comprend d'après les explications qui précèdent que la colonnette qui vient d'être décrite permet d'atteindre les objectifs de l'invention. En effet, lors de l'assemblage du frein à disque, qu'il s'agisse de l'assemblage initial ou du remontage du frein après une opération telle qu'un changement des garnitures de friction, les colonnettes 22 sont tout d'abord mises en place dans les alésages 24, ainsi qu'on le voit mieux sur la Figure 7.

L'exemple représenté sur cette Figure correspond à la colonnette de la Figure 4 dont une des ondulations 44 a été omise, où à la colonnette de la Figure 2 où l'ondulation 44 est décentrée vers l'extrémité du tube 38, mais on aurait pu aussi bien représenter ces colonnettes telles quelles ou celles des Figures 3 ou 5.

On voit sur la Figure 7 que, dans cette position, l'ondulation 44 est comprimée radialement dans l'alésage 24, ce qui procure un centrage parfait de la colonnette 22 dans l'alésage, et ce qui permet également de ménager un jeu diamétral J entre l'alésage 24 et la ou les parties cylindriques de la colonnette 22 ne comportant pas d'ondulations.

On peut ensuite installer l'étrier 12 sur le support fixe 10 en introduisant les vis 34 dans les ouvertures des bras 35 et en les vissant dans les alésages 32.

On voit ainsi que l'élasticité du matériau constituant les colonnettes, principalement dans le sens radial, permet de tenir compte des tolérances de fabrication du frein à disque, telles que l'écartement des axes des alésages 24 et des ouvertures dans les bras 35, le parallélisme entre ces axes ou les faces terminales de l'entretoise 36, ou la perpendicularité entre l'axe de l'alésage 24 et la face 37 du bras 35 servant de surface d'appui à l'entretoise 36 ou à la première partie 28 de la colonnette 22.

De plus, lors d'une action de freinage, les colonnettes 22 permettent le coulissement de l'étrier 12 sur le support fixe 10, même si l'un de ces éléments subit une déformation par exemple dûe à un freinage intense, une telle déformation étant absorbée par les colonnettes. Lorsque l'action de freinage cesse, les divers éléments du frein peuvent revenir librement dans leur position de repos grâce à l'élasticité des colonnettes. De la sorte, tous les effets de coincement sont évités, et l'efficacité du freinage s'en trouve améliorée.

Les colonnettes qui viennent d'être décrites sont susceptibles de recevoir de nombreuses modifications. C'est ainsi qu'on a représenté sur la Figure 3 une colonnette dont la première partie 28 est obtenue par repliage ou sertissage d'une extrémité du tube constituant la seconde partie 30 de la colonnette 22.

Sur la Figure 4, on voit que la colonnette 22 est formée de deux parties, la première partie 28' étant rapportée sur la seconde partie 30 qui, dans cet exemple, comporte des lamelles 42 formées chacune avec deux ondulations 44. La première partie 28' présente dans cet exemple la forme d'un écrou à six pans, et est solidarisée à la seconde partie 30 par emmanchement à force, vissage ou soudage. La première partie 28' peut aussi être d'une seule pièce avec la seconde partie 30. Une telle réalisation de la première partie 28' permet de se dispenser de l'entretoise 36, et permet d'autre part de maintenir en rotation la colonnette 22 pendant le vissage de la vis 34. On voit également sur les Figures 4 et 4 A que les fentes 40 sont interrompues à une certaine distance D de l'extrémité de la seconde partie 30 pénétrant dans l'alésage 24, pour rigidifier cette extrémité et éviter que les lamelles 42 ne soient écartées pendant leur manutention.

Une telle réalisation des fentes 40 est bien sûr applicable aux réalisations représentées sur les autres figures.

Les Figure 5 et 5 A représentent une réalisation analogue à celle de la Figure 3, où la première partie est obtenue par repliage ou sertissage d'une extrémité de la seconde partie 30, et dans laquelle un insert tubulaire 46 est disposé dans la première partie 28 pour la rigidifier et former l'alésage 32 destiné à recevoir la vis 34. L'insert 46 est monté à force, vissé ou soudé dans la partie 28.

De façon avantageuse, on pourra disposer à l'intérieur du tube 38 formant la seconde partie de la colonnette un corps élastique, comme par exemple un cylindre de caoutchouc 45 ainsi qu'on l'a représenté sur la Figure 6, pour d'une part amortir les vibrations éventuelles de l'étrier lors du fonctionnement du frein à disque, et d'autre part limiter la déformation radiale vers l'intérieur des lamelles 42 pour que les ondulations 44 conservent un contact permanent avec l'alésage 24. Un tel corps élastique pourra bien sûr équiper les colonnettes réalisées selon les autres variantes. De même, on pourra former sur la seconde partie 28 une gorge périphérique 48 destinée à recevoir une extrémité d'un soumet tubulaire souple 50, dont l'autre extrémité est fixée au support fixe 10 autour de l'alésage 24, le soumet 50 servant à éviter l'intrusion d'impuretés dans l'alésage 24.

De façon également avantageuse, en particulier pour l'exemple de la Figure 7, on pourra former dans l'alésage 24, à proximité de son extrémité, une gorge 52 destinée à recevoir un joint ou une bague élastique 54, entourant la colonnette 24 de façon à former une suspension élastique de la colonnette 22 à l'entrée de l'alésage 24, comme on l'a représenté sur la Figure 8.

Une telle suspension élastique ne modifie en rien les caractéristiques de la colonnette qui ont été décrites plus haut ni le fonctionnement du frein à disque, mais elle permet d'éviter que, dans certaines conditions extrêmes de fonctionnement, le jeu J ne soit annulé, par exemple lors de vibrations de forte amplitude résultant d'un freinage intense sur un revêtement routier dégradé.

La bague élastique 54 permet ainsi d'éviter une usure prématurée de la colonnette ou de l'alésage, et contribue à réduire le bruit de fonctionnement du frein à disque. Elle pourra bien évidemment être utilisée en combinaison avec les colonnettes représentées sur les Figures 2 à 6.

Bien entendu, l'invention n'est pas limitée aux modes de réalisation décrits, mais est susceptible de recevoir de nombreuse modifications qui apparaîtront à l'homme du métier. C'est ainsi qu'on pourra utiliser sur un frein à disque une seule des colonnettes qui viennent d'être décrites, l'autre colonnette étant conventionnelle, c'est-à-dire massive et non élastique. C'est ainsi également que l'invention est applicable aux freins à disque dans lesquels les colonnettes sont fixées au support fixe et reçues dans des alésages de l'étrier.

## Revendications

1. Frein à disque à étrier (12) monté coulissant sur un support fixe (10) et comportant deux éléments de friction (16, 16') reçus en ancrage et coulissement dans le support fixe (10), et susceptibles de venir en engagement de friction avec les faces opposées d'un disque tournant (14) lors de l'actionnement d'un moteur de frein (20) porté par l'étrier (12), l'étrier (12) coulissant par rapport au support fixe au moyen d'au moins une colonnette axiale (22), comportant une première partie (28, 28') solidaire de l'étrier ou du support fixe (10) et une seconde partie (30) reçue à coulissement dans un alésage (24) correspondant du support fixe (10) ou de l'étrier (12) respectivement, des moyens élastiques étant disposés entre la colonnette axiale (22) et l'alésage (24) dans lequel elle coulisse, caractérisé en ce que la seconde partie (30) de la colonnette (22) est constituée d'un tube (38) en matériau élastique, des fentes (40) étant pratiquées dans l'épaisseur du tube et sur au moins une partie de sa longueur, les fentes (40) étant régulièrement réparties le long de la périphérie du tube (38), pour former des lamelles (42) équidistantes et de largeur égale, chaque lamelle (42) présentant sur sa longueur au moins une ondulation (44), dont la convexité est dirigée vers l'extérieur de la colonnette (22), le rayon au sommet de l'ondulation (44) étant au repos supérieur ou égal au rayon de l'alésage (24).

2. Frein à disque selon la revendication 1, caractérisé en ce que la première partie (28, 28') de la colonnette (22) est d'une seule pièce avec la seconde partie (30) de la colonnette (22) et comporte un alésage axial (32) permettant sa solidarisation avec l'étrier (12) ou le support fixe (10).

3. Frein à disque selon la revendication 2, caractérisé en ce que la première partie (28, 28') de la colonnette (22) est formée par repliage ou sertissage du tube constituant la seconde partie (30) de la colonnette (22).

4. Frein à disque selon la revendication 3, caractérisé en ce que la première partie (28) de la colonnette comporte un insert métallique tubulaire (46) dans lequel est formé l'alésage axial (32) .

5. Frein à disque selon la revendication 1, caractérisé en ce que la première partie (28, 28') de la colonnette (22) est rapportée sur la seconde partie (30) de la colonnette (22).

6. Frein à disque selon la revendication 1, caractérisé en ce qu'un corps élastique (45) est disposé à l'intérieur du tube (38) en matériau élastique.

7. Frein à disque selon la revendication 1, caractérisé en ce qu'une bague élastique (54) entoure la colonnette axiale (22) et est reçue dans une gorge (52) formée dans l'alésage (24).

8. Frein à disque selon la revendication 1, caractérisé en ce qu'un jeu diamétral (J) est ménagé entre l'alésage (24) et une partie cylindrique de la colonnette axiale (22).

9. Colonnette pour frein à disque, caractérisée en ce qu'elle comprend les caractéristiques telles que décrites dans l'une quelconque des revendications précédentes.

## Patentansprüche

1. Scheibenbremse mit Bremssattel (12), der verschiebbar an einem feststehenden Träger (10) angebracht ist und zwei Reibelemente (16, 16') aufweist, die verankert und verschiebbar in dem feststehenden Träger (10) aufgenommen sind und bei Betätigung einer von dem Bremssattel (12) getragenen Bremsbetätigungsvorrichtung (20) mit zueinander entgegengesetzten Seiten einer sich drehenden Scheibe (14) in Reibungseingriff gebracht werden können, wobei der Bremssattel (12) bezüglich des feststehenden Trägers mittels wenigstens einer axialen Stange (22) verschiebbar ist, die einen ersten Abschnitt (28, 28'), der fest mit dem Bremssattel oder dem feststehenden Träger (10) verbunden ist, und einen zweiten Abschnitt (30) aufweist, der verschiebbar in einer zugehörigen Bohrung (24) des feststehenden Trägers (10) beziehungsweise des Bremssattels (12) aufgenommen ist, wobei zwischen der axialen Stange (22) und der Bohrung (24), in welcher diese gleitet, elastische Mittel angeordnet sind, dadurch gekennzeichnet, daß der zweite Abschnitt (30) der Stange (22) durch ein Rohr (38) aus elastischem Material gebildet ist, wobei in der Dicke des Rohres und entlang wenigstens einem Teil seiner Länge Schlitze (40) ausgebildet sind, wobei die Schlitze (40) gleichmäßig entlang dem Umfang des Rohres (38) verteilt sind, um gleichmäßig voneinander beabstandete Lamellen (42) mit gleicher Breite zu bilden, wobei jede Lamelle (42) auf ihrer Länge wenigstens eine Wellung (44) aufweist, deren Konvexität von der Stange (22) nach außen gerichtet ist, wobei der Radius am Scheitel der Wellung (44) in der Ruhestellung größer oder gleich dem Radius der Bohrung (24) ist.

2. Scheibenbremse nach Anspruch 1, dadurch gekennzeichnet, daß der erste Abschnitt (28, 28') der Stange (22) einstückig mit dem zweiten Abschnitt (30) der Stange (22) ausgebildet ist und eine axiale Bohrung (32) aufweist, die ihre Befestigung an dem Bremssattel (12) oder dem feststehenden Träger (10) ermöglicht.

3. Scheibenbremse nach Anspruch 2, dadurch gekennzeichnet, daß der erste Abschnitt (28, 28') der Stange (22) durch Umbiegen oder Umbördeln des Rohres gebildet ist, das den zweiten Abschnitt (30) der Stange (22) bildet.

4. Scheibenbremse nach Anspruch 3, dadurch gekennzeichnet, daß der erste Abschnitt (28) der Stange einen rohrförmigen Metalleinsatz (46) aufweist, in welchem die axiale Bohrung (32) gebildet ist.

5. Scheibenbremse nach Anspruch 1, dadurch gekennzeichnet, daß der erste Abschnitt (28, 28') der Stange (22) am zweiten Abschnitt (30) der Stange (22) befestigt ist.

6. Scheibenbremse nach Anspruch 1, dadurch gekennzeichnet, daß ein elastischer Körper (45) im Inneren des Rohres (38) aus elastischem Material angeordnet ist.

7. Scheibenbremse nach Anspruch 1, dadurch gekennzeichnet, daß ein elastischer Ring (54) die axiale Stange (22) umgibt und in einer Nut (52) aufgenommen ist, die in der Bohrung (24) gebildet ist.

8. Scheibenbremse nach Anspruch 1, dadurch gekennzeichnet, daß zwischen der Bohrung (24) und einem zylindrischen Abschnitt der axialen Stange (22) ein diametrales Spiel (J) ausgebildet ist.

9. Stange für eine Scheibenbremse, dadurch gekennzeichnet, daß sie die Merkmale nach einem der vorhergehenden Ansprüche aufweist.

## Claims

1. Disc brake with a caliper (12) slidingly mounted on a fixed support (10) and including two friction pads (16, 16') received with anchorage and sliding in the fixed support (10), and capable of coming into frictional engagement with the opposite faces of a rotating disc (14) when a brake motor (20) carried by the caliper (12) is actuated, the caliper (12) sliding with respect to the fixed support by means of at least one axial guide pin (22), including a first part (28, 28') secured to the caliper or to the fixed support (10), and a second part (30) received with sliding in a corresponding bore (24) of the fixed support (10) or of the caliper (12) respectively, elastic means being disposed between the axial guide pin (22) and the bore (24) in which it slides, characterized in that the second part (30) of the guide pin (22) consists of a tube (38) made of an elastic material, slits (40) being made in the thickness of the tube and, over at least part of its length, the slits (40) being uniformly distributed along the periphery of the tube (38) in order to form equidistant thin strips (42) of equal width, each thin strip (42) exhibiting, over its length, at least one corrugation (44) of which the convexity points towards the outside of the guide pin (22), the radius at the crest of the corrugation (44) at rest being greater than, or equal to, the radius of the bore (24).

2. Disc brake according to Claim 1, characterized in that the first part (28, 28') of the guide pin (22) is formed integrally with the second part (30) of the guide pin (22) and includes an axial bore (32) allowing it to be secured to the caliper (12) or to the fixed support (10).

3. Disc brake according to Claim 2, characterized in that the first part (28, 28') of the guide pin (22) is formed by folding over or crimping the tube constituting the second part (30) of the guide pin (22).

4. Disc brake according to Claim 3, characterized in that the first part (28) of the guide pin includes a tubular metal insert (46) in which the axial bore (32) is formed.

5. Disc brake according to Claim 1, characterized in that the first part (28, 28') of the guide pin (22) is attached to the second part (30) of the guide pin (22).

6. Disc brake according to Claim 1, characterized in that an elastic body (45) is located inside the tube (38) made from elastic material.

7. Disc brake according to Claim 1, characterized in that an elastic ring (54) surrounds the axial guide pin (22) and is received in a groove (52) formed in the bore (24).

8. Disc brake according to Claim 1, characterized in that a diametral clearance (J) is left between the bore (24) and a cylindrical part of the guide pin (22).

9. Guide pin for a disc brake, characterized in that it includes the characteristics as described in any one of the preceding claims.
